Europäisches Patentamt

European Patent Office

Office européen des brevets

(11) Veröffentlichungsnummer: **0 477 421 A1**

## EUROPÄISCHE PATENTANMELDUNG

(21) Anmeldenummer: **90118715.3**

(22) Anmeldetag: **28.09.90**

(51) Int. Cl.5: **H01S 3/034**

(43) Veröffentlichungstag der Anmeldung:
**01.04.92 Patentblatt 92/14**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Welsch, Wolfgang, Dr.-Ing.**
**Fuchsweg 25b**
**W-8011 Baldham(DE)**
Erfinder: **Krüger, Hans, Dipl.-Phys.**
**Peralohstrasse 83**
**W-8000 München 83(DE)**
Erfinder: **Pape, Heinz, Dipl.-Phys.**
**Vogesenstrasse 33a**
**W-8000 München 82(DE)**

(54) **Spiegelhalterung für Gaslaser.**

(57) Der Einsatz eines Materials für die Spiegelhalterung (1), dessen Temperaturkoeffizient nicht an den des Spiegels (7) angepaßt ist, ist ermöglicht, indem die Spiegelhalterung (1) aus einem dickwandigen Teil (2) und einem den Spiegel (7) umgreifenden dünnwandigen Zylinder (4) zusammengesetzt ist und indem der Spiegel (7) mittels Glaslot nur im Bereich der freiliegenden Stirnseite (5) des dünnwandigen Zylinders (4) eingelötet ist.

Rank Xerox (UK) Business Services

EP 0 477 421 A1

Die vorliegende Erfindung betrifft eine Spiegelhalterung nach dem Oberbegriff des Patentanspruchs 1. Eine derartige Spiegelhalterung ist aus der US-PS 4 943 972 bekannt. Dort werden Spiegel auf ein im Endbereich versteiftes Rohr aufgeklebt. Der Kleber nimmt dabei die Spannungen, die bei Temperaturschwankungen entstehen, auf. Der Einsatzbereich, in dem die zur Verfügung stehenden Kleber einen vakuumdichten Verschluß gewährleisten und nicht gasen, ist jedoch beschränkt.

Die Aufgabe, die der vorliegenden Erfindung zugrundeliegt, besteht in einer kostengünstigen Ausführung eines Gaslasers, welche in einem großen Temperaturintervall einsatzfähig ist und gegen Austreten von Gas aus dem Bindeglied zwischen Spiegel und Spiegelhalterung in den Laser hinein gesichert ist.

Diese Aufgabe wird bei einem Laser nach Oberbegriff durch die kennzeichnenden Merkmale des Patentanspruchs 1 gelöst. Glaslot läßt sich zum Einlöten der Spiegel nicht ohne weiteres einsetzen, ist aber in Verbindung mit einem dünnwandigen und daher duktilen Zylinder ausreichend elastisch, um einen sicheren und vakuumdichten Abschluß des Lasers zu gewährleisten, ohne daß ein unzulässig hoher Druck auf den Spiegel ausgeübt wird. Die vorliegende Erfindung vereint eine ausreichende Festigkeit der Halterung mit einer ausreichend spannungsfreien Aufhängung des Spiegels. Sie ist möglich, da das Glaslot auch im flüssigen Zustand relativ zäh ist, so daß die Spalte relativ groß gehalten werden können, und durch Kapillarwirkung weniger in einen Spalt hinein gezogen wird als Metallot, so daß eine Begrenzung der vom Lot benetzten Fläche auf den Stirnbereich des dünnwandigen Zylinders möglich ist.

Die Spiegelfassung besteht dabei vorteilhaft aus Kupfer oder Aluminium. Diese Werkstoffe sind duktil und daher zum Justieren der Spiegel nach dem Zusammenbau gut geeignet. Insbesondere bei Aluminium ist es vorteilhaft, wenn der dünnwandige Zylinder auf seiner Innenwand mit einem Überzug aus einem gut am Glaslot haftenden Material beschichtet ist. Hierzu eignet sich beispielsweise Nickel oder Chrom.

Die Spiegelhalterung ist vorteilhaft in eine Ausnehmung einer Endkappe eingelötet, deren Temperaturausdehnungskoeffizient an den des Gehäusesrohres angepaßt ist, wobei die Spiegelhalterung im Bereich der Lötstelle einen mögligst kleinen Außendurchmesser besitzt. Zur besseren Fixierung reicht die Spiegelhalterung vorteilhaft durch die Endkappe hindurch in den Laser hinein, wobei auf der Innenseite der Metallkappe auf die Spiegelhalterung eine Scheibe aufgesetzt und mit ihr und der Endplatte verlötet ist. Die Scheibe besteht dabei vorteilhaft aus einem Material, dessen Temperaturausdehnungskoeffizient an den der Endkappe angepaßt ist.

Zur weiteren Erhöhung der Duktilität des Zylinders ist es vorteilhaft, wenn in den Zylindern ein oder mehrere Ringnuten eingeprägt sind.

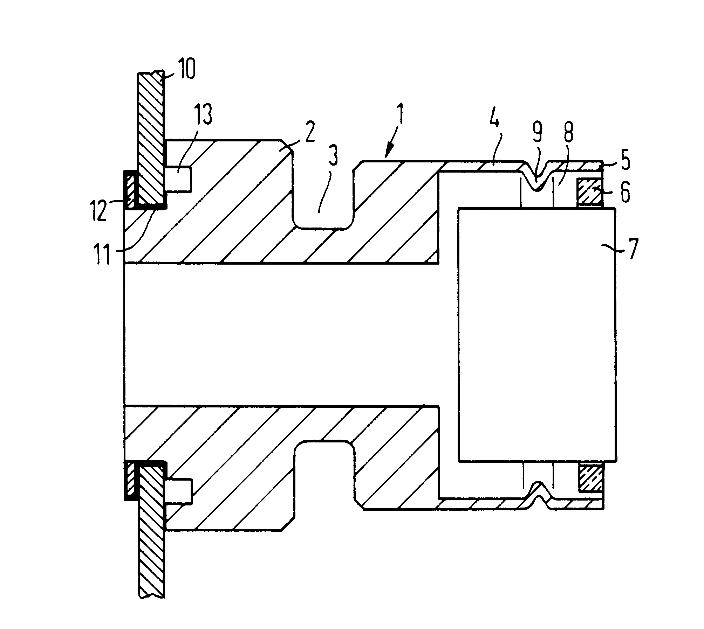

Die Erfindung wird nun anhand einer Figur näher erläutert. Die Figur zeigt eine erfindungsgemäße Spiegelhalterung in geschnittener Ansicht.

Die Spiegelhalterung 1 weist einen dickwandigen Teil 2 und einen dünnwandigen Zylinder 4 auf. Der dickwandige Teil 2 enthält eine Ringnut 3, die den Ansatz eines Justierwerkzeuges ermöglicht. Im Bereich der Stirnseite 5 des dünnwandigen Zylinders 4 ist ein Glaslotring 6 angeordnet, welcher beim Lötvorgang den Spiegel 7 und den Zylinder 4 vakuumdicht miteinander verbindet, ohne in den Spalt 8 zwischen den Spiegel 7 und den Zylinder 4 weit einzudringen. Eine Ringnut 9 erhöht die Duktilität des dünnwandigen Zylinders 4.

Die Spiegelhalterung 1 ist in eine aus Metall bestehende Endkappe 10 eingesetzt. Im Bereich der Endkappe 10 weist die Spiegelhalterung 1 einen Zylinderbereich 11 mit relativ kleinem Durchmesser auf. Im Laserraum ist auf dem Zylinderbereich 11 ein Ring 12 aus einem an den Temperaturkoeffizienten der Endkappe 10 angepaßten Material aufgesteckt und mit dem Zylinderbereich 11 und der Endkappe 10 verlötet. Auf der Außenseite der Endkappe 10 besitzt die Spiegelhalterung 1 eine Ringnut 13, die den durch die Kapillarwirkung erzeugte Lotfluß begrenzt, so daß der äußere Teil der Spiegelhalterung 1 keine Verspannungen in der Endkappe 10 erzeugen.

**Patentansprüche**

1. Spiegelhalterung für einen Gaslaser, insbesondere HeNe-Laser, welche aus einem an den Temperaturausdehnungskoeffizienten des Spiegels nicht angepaßten Material besteht, in der zur Aufnahme von mechanischen Spannungen zwischen der Spiegelhalterung und dem Spiegel ein Bindeglied vorgesehen ist, **dadurch gekennzeichnet,** daß die Spiegelhalterung aus einem dickwandigen Teil und einem den Spiegel umgreifenden dünnwandigen Zylinder besteht, daß der Spiegel in den dünnwandigen Zylinder mittels Glaslotes eingelötet ist, daß das Glaslot nur einen an die offenliegende Stirnseite des Zylinders angrenzenden Teil des dünnwandigen Spiegels berührt und in diesem Teil den Laser vakuumdicht abschließt.

2. Spiegelhalterung nach Anspruch 1, **dadurch gekennzeichnet,** daß sie aus Kupfer oder Aluminium besteht.

3. Spiegelhalterung nach einem der Ansprüche 1 oder 2, **dadurch gekennzeichnet,** daß der dünnwandige Zylinder auf seiner Innenwand mit einem Überzug aus einem gut an Glaslot haftenden Material beschichtet ist.

4. Spiegelhalterung nach Anspruch 3, **dadurch gekennzeichnet,** daß der Zylinder mit Nickel oder Chrom beschichtet ist.

5. Spiegelhalterung nach einem der Ansprüche 1 bis 4, **dadurch gekennzeichnet,** daß die Spiegelfassung in eine Ausnehmung einer Endkappe eingelötet ist, deren Temperaturausdehnungskoeffizient an den eines Gehäuserohres angepaßt ist und daß die Spiegelhalterung im Bereich der Lötstelle einen möglichst kleinen Außendurchmesser besitzt.

6. Laser mit einer Spiegelhalterung nach Anspruch 5 ,**dadurch gekennzeichnet,** daß die Spiegelhalterung durch die Endkappe hindurch in den Laser hineinreicht und daß auf der Innenseite der Endkappe auf die Spiegelhalterung eine Scheibe aufgesetzt und mit ihr und der Endplatte verlötet ist.

7. Laser nach Anspruch 6, **dadurch gekennzeichnet,** daß die Scheibe aus einem Material besteht, dessen Temperaturausdehnungskoeffizient an den der Endplatte angepaßt ist.

8. Spiegelhalterung nach einem der Ansprüche 1 bis 6, **dadurch gekennzeichnet,** daß in den dünnwandigen Zylinder eine oder mehrere Ringnuten eingeprägt sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 315 030 (SIEMENS)<br>* Zusammenfassung; Abbildungen 1-3<br>* & US-A-4 943 972 (Kat. D)<br>– – – | 1,2,8 | H 01 S 3/034 |
| Y | US-A-4 064 466 (F. SEKI et al.)<br>* Spalte 2, Zeilen 37-45; Abbildungen 1-5 *<br>– – – | 1,8 | |
| Y | US-A-3 851 275 (T. FURUSE et al.)<br>* Spalte 3, Zeilen 10-35; Abbildungen 1-3 *<br>– – – – – | 1,2,8 | |

RECHERCHIERTE SACHGEBIETE (Int. Cl.5)

H 01 S

Der vorliegende Recherchenbericht wurde für alle Patentansprüche erstellt

| Recherchenort | Abschlußdatum der Recherche | Prüfer |
|---|---|---|
| Den Haag | 29 Mai 91 | MALIC K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

-------------------------------------------------------------

& : Mitglied der gleichen Patentfamilie, übereinstimmendes Dokument